(19) Europäisches Patentamt
European Patent Office
Office européen des brevets

(11) **EP 2 131 545 B1**

(12) **EUROPEAN PATENT SPECIFICATION**

(45) Date of publication and mention
of the grant of the patent:
**28.11.2012   Bulletin 2012/48**

(51) Int Cl.:
***H04L 27/26*** *(2006.01)*

(21) Application number: **08008937.8**

(22) Date of filing: **14.05.2008**

(54) **Technique for peak power reduction**

Verfahren zur Spitzenleistungsverringerung

Technique de réduction de la puissance de pic

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**09.12.2009   Bulletin 2009/50**

(73) Proprietor: **Telefonaktiebolaget LM Ericsson
(publ)
16483 Stockholm (SE)**

(72) Inventor: **Lipka, Dietmar
92348 Berg (DE)**

(74) Representative: **Åkerman, Mårten Lennart
Ericsson AB
Patent Unit Mobile Platforms
221 83 Lund (SE)**

(56) References cited:
**EP-A1- 1 469 649     US-A1- 2005 089 109
US-B1- 6 175 551**

• **JAE HONG LEE ET AL: "Modulation, coding and
signal processing for wireless communications
- An overview of peak-to-average power ratio
reduction techniques for multicarrier
transmission" IEEE WIRELESS
COMMUNICATIONS, IEEE SERVICE CENTER,
PISCATAWAY, NJ, US, vol. 12, no. 2, 1 April 2005
(2005-04-01), pages 56-65, XP011130574 ISSN:
1536-1284**
• **MYUNG H.G. ET AL: "Single Carrier FDMA for
Uplink Wireless Transmission", IEEE
VEHICULAR TECHNOLOGY MAGAZINE, vol. 1,
no. 3, 1 September 2006 (2006-09-01), pages
30-38, XP011165321, IEEE, US**
• **HYUNG G MYUNG ET AL: "Peak Power
Characteristics of Single Carrier FDMA MIMO
Precoding System", VEHICULAR TECHNOLOGY
CONFERENCE, 2007. VTC-2007 FALL. 2007 IEEE
66TH, IEEE, PI, 1 September 2007 (2007-09-01),
pages 477-481, XP031147449, ISBN:
978-1-4244-0263-2**

## Description

### Technical Field

The invention generally relates to signal processing. Specifically, the invention is directed to a peak power reduction technique for signals comprising a plurality of orthogonal subcarriers.

### Background

In multi-transmitter wireless communications systems, channel access techniques allow multiple transmitters connected to the same physical channel to share its transmission capacity. Various channel access techniques are known in the art. In second generation communications systems according to the Global System for Mobile communications (GSM) standard for example, Time Division Multiple Access (TDMA) techniques are utilized to divide a specific frequency channel into individual time slots assigned to individual transmitters. In third generation communications systems, Code Division Multiple Access (CDMA) techniques divide channel access in the signal space by employing a combination of spread spectrum operations and a special coding scheme in which each transmitter is assigned an individual code. The next advance in wireless communications systems considers Orthogonal Frequency Division Multiple Access (OFDMA) techniques to achieve still higher bit rates.

One major advantage of OFDMA over other channel access techniques is its robustness in the presence of multi-path signal propagation. On the other hand, the waveform of OFDMA signals exhibits very pronounced envelope fluctuations resulting in a high Peak-to-Average Power Ratio (PAPR). Signals with high PAPR require highly linear power amplifiers to avoid excessive inter-modulation distortion, and these power amplifiers have to be operated with a large back-off from their peak power. The result is a low power efficiency, which places a significant burden specifically on battery operated transmitters as utilized in mobile telephones and similar user equipment.

The disadvantage of a high PAPR inherent to OFDMA is to a certain extent overcome by the Single Carrier Frequency Division Multiple Access (SC-FDMA) technique, which can be regarded as a modification of the OFDMA technique. The Third Generation Partnership Project (3GPP) is considering using both OFDMA and SC-FDMA in next generation communications systems currently standardized in the Long Term Evolution (LTE) project. According to the 3GPP Technical Specification 36.211 "Physical Channels and Modulation", V1.2.0 of June 2007, SC-FDMA will be implemented in the LTE user equipment for the uplink direction towards the access network. OFDMA, on the other hand, will be used for the downlink direction from the LTE access network towards the user equipment.

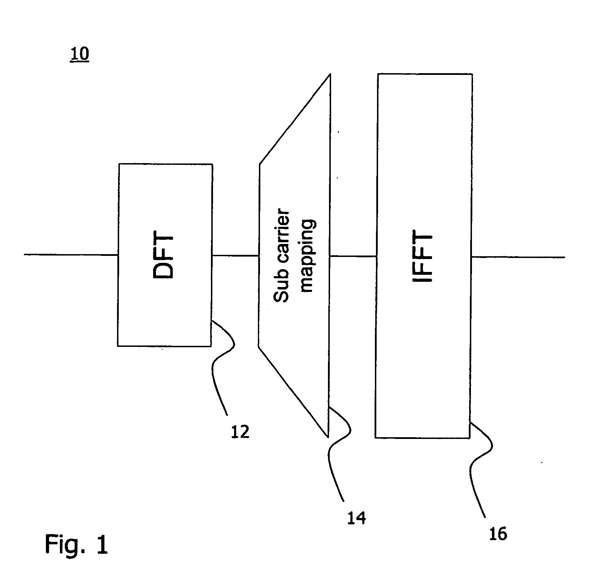

An exemplary realization of an SC-FDMA modulator stage 10 is schematically illustrated in Fig. 1. The modulator stage 10 receives as input signal a multilevel sequence of complex-valued symbols in one of several possible modulation formats such as Binary Phase Shift Keying (BPSK) or 16 level Quadrature Amplitude Modulation (16-QAM). The modulation symbols are received in sets (also called blocks) containing M symbols each. Every set of M symbols is subjected to an M-point Discrete Fourier Transform (DFT) in a DFT block 12. The DFT block 12 spreads the bits of the M input symbols over the available subcarriers to obtain a frequency domain representation of the M symbols.

Next, the M DFT outputs are mapped to one of N (N > M) orthogonal subcarriers in a mapping block 14. In the TS 36.211 document mentioned above, the value of M is defined to be

$$M_{sc}^{PUSCH} = 12 \cdot 2^{\alpha_2} \cdot 3^{\alpha_3} \cdot 5^{\alpha_5} \leq 1320.$$

The mapping block 14 outputs a set of N complex subcarrier amplitudes, and exactly M of the amplitudes will be non-zero.

The subcarrier amplitudes output by the mapping block 14 are re-transformed by an Inverse Fast Fourier Transform (IFFT) block 16 into a time domain signal. The resulting time domain signal may then be subjected to a phase rotation (not shown) to correct any phase errors introduced by the previous signal processing operations in blocks 12 to 16. Furthermore, a Cyclic Prefix (CP) may be inserted into the output signal of the IFFT block 16. The CP provides a guard-time between two sequentially transmitted symbol blocks to reduce inter-block interference caused by multi-path propagation.

Except for an omission of the DFT block 12 used to spread the bits of the input symbols over the available subcarriers, an OFDMA modulator stage has a similar configuration as the SC-FDMA modulator stage 10 shown in Fig. 1. For this reason, SC-FDMA is sometimes also interpreted as a DFT spread OFDMA.

As has been mentioned above, the PAPR of SC-FDMA is lower than the PAPR of OFDMA. However, the PAPR gain that can be obtained compared to OFDMA is only up to 2dB. With about 7.5 dB (envelope peak factor), the PAPR of SC-FDMA as used in the uplink direction of LTE systems is still significantly high compared to a PAPR of 4 to 6 dB in Wideband CDMA (WCDMA) systems, of 3 dB in Enhanced Data Rate for GSM Evolution (EDGE) systems and of 0 dB in GSM systems.

In order to lower the PAPR of SC-FDMA and OFDMA signals, peak power reduction techniques may be implemented. However, simple peak power reduction techniques such as clipping do not conserve the signal shape very well. Other, more sophisticated techniques cannot cope with the dynamic resource allocation in LTE systems according to which the spectral shape of the OFDMA and SC-FDMA signals may change considerably within milliseconds.

US 2005/0089109 A1 teaches a PAPR reduction technique for an OFDM communication system in which L subcarriers are allocated to reserved tone locations among N subcarriers, and data is carried on the remaining (N-L) subcarriers, with L < N. The reserved tones do not carry any data but are merely used for PAPR reduction. To this end, a scaling signal reducing the PAPR is transmitted on the L subcarriers allocated to the reserved tones. To avoid a distortion of data symbols carried on the remaining (N-L) subcarriers, the scaling signal is designed to have, in the frequency domain, the value zero at locations other than the L reserved tone locations.

US 6,175,551 B1 teaches a further technique for reducing the PAPR in an OFDM communication system Peak cancellation is performed on a symbol-by-symbol basis using a cancellation signal generated by means of a low pass filter. The resulting cancellation signal is windowed to approximately the same bandwidth as the transmitter signal and subtracted from a delayed time-domain IFFT signal. In the OFDM context taught in US 6,175,551 B1, a set of N complex signal symbols is mapped on the same number of N subcarriers.

The Review Article "Modulation, Coding and Signal Processing for Wireless Communications" by S. H. Han and J. H. Lee provides an overview of PAPR reduction techniques for a multicarrier transmission. The PAPR and its probability distribution function are defined on page 57. A filtering technique and oversampling technique are proposed to mitigate harmful effects of amplitude clipping on page 58.

The document entitled "Single Carrier FDMA for Uplink Wireless Transmission" by H. G. Myung et al., IEEE VEHICULAR TECHNOLOGY MAGAZINE, 2006/09, pp. 30-38 gives an overview of SC-FDMA and compares the performance indicators of system throughput and PAPR for localized SC-FDMA and distributed SC-FDMA. Section 2 of the document outlines SC-FDMA as introduced above. Section 3 provides numerical simulation results on the PAPR and finds that pulse shaping increases the PAPR. Section 4 investigates channel-dependent resource scheduling for the SC-FDMA system and observes a superior throughput for localized FDMA.

European Patent Application EP 1 469 649 A1 describes a conventional technique for peak-to-average power ratio reduction. A modulated signal stream is oversampled. Peaks in the oversampled signals are detected. A pulse shaping filter provides a correction signal, which is subtracted from a delayed version of the oversampled signal.

The research article "Peak Power Characteristics of Single Carrier FDMA MIMO Precoding System" by H. G. Myung et al., VTC, IEEE 66th, 1 September 2007, pp. 477-481 describes a technique of amplitude clipping aiming at reducing harmful effects on performance or spectral growth in the context of MIMO spatial multiplexing.

## Summary

Accordingly, it is an object of the present invention to provide an efficient peak power reduction technique for a signal that comprise a plurality of subcarriers, especially in cases in which the subcarriers are allocated dynamically.

According to a first aspect, a method of peak power reduction in a transmitter stage configured to dynamically map a set of M input symbols onto a set of N orthogonal subcarriers to generate a modulated signal as a stream after single-carrier frequency-division multiple access (SC-FDMA) modulation and cyclic prefix insertion is provided according to claim 1, wherein the method comprises the steps of receiving the modulated signal stream in a time domain representation, evaluating a power distribution of the modulated signal stream in the time domain to detect one or more power peaks, and processing the one or more power peaks detected in the modulated signal stream taking into account the subcarrier mapping.

The mapping of input symbols to subcarriers is changed dynamically. The mapping may, for example, change responsive to autonomous decisions (locally performed by a controller co-located with the transmitter stage) or in response to a command signal received from an external controller. In the case the mapping of input symbols to subcarriers changes, the method may further comprise the step of adapting the processing of the one or more power peaks accordingly (i.e., taking into account the new mapping of input symbols to subcarriers).

The size of the set of input symbols is smaller than the size of the set of orthogonal subcarriers (i.e., M < N). In the case M input symbols have to be mapped onto N orthogonal subcarriers with M < N, the M input symbols are mapped onto M orthogonal subcarriers. To each of the remaining (N-M) orthogonal subcarriers any predefined value (such as a value zero) is allocated.

In the case a predefined value such as zero is allocated to the remaining (N-M) orthogonal subcarriers (with M < N), the step of processing the one or more power peaks is performed taking into account the one or more spectral portions defined by these (N-M) subcarriers. The power peak processing may, for example, be performed such that no processing artefacts are generated in spectral portions defined by subcarriers onto which no input symbols are mapped. In other words, the processing leaves the one or more spectral portions consisting of the (N-M) subcarriers to which the predefined value has been allocated essentially undisturbed.

The power peak processing may be based on an error signal. In one implementation, the error signal has a pulse shape that essentially does not extend into the one or more spectral portions defined by subcarriers onto which no input symbols are mapped. That is, the pulse shape of the error signal may be confined to the spectrum of the M subcarriers to which input symbols are allocated.

The process of generating the error signal may comprise generating an intermediate signal indicative of at least one of a position, an amplitude and a phase of each of the one or more power peaks detected in the modulated signal stream. The error signal generation process may further comprise subjecting the intermediate signal to a pulse shaping operation taking into account the subcarrier mapping.

The pulse shaping operation may be based on a filter function. The filter function may be determined in various ways. For example, the filter function may be calculated or derived from a table based on the subcarrier mapping. As another example, the filter function may be obtained based on a predefined test pattern. If a test pattern is used, a fixed pattern may in a first step be mapped onto the subcarriers in accordance with the subcarrier mapping to generate the test pattern. In a next step, the test pattern mapped onto the subcarriers may be transformed into the time domain using, for example, an IFFT. Then, in a further step, the filter function may be derived from the resulting time domain signal.

The test pattern may be defined in a fixed manner, or it may dynamically (e.g., repeatedly) be determined. In one scenario, the test pattern comprises in a frequency domain representation test values at frequency points of the subcarriers onto which input symbols are mapped. The remaining test values of the test pattern (i.e., the test values at frequency points of subcarriers onto which no input symbols are mapped) may be set to zero.

Various techniques for detecting power peaks in the modulated signal may be applied. In one implementation, the evaluation of the power distribution of the modulated signal stream for peak detection purposes comprises a threshold decision. In this regard, individual signal samples may be compared with a predefined or dynamically selected threshold value. The power peak processing may generally aim at reducing the detected power peaks to a signal level not exceeding this threshold value applied during the threshold decision.

In order to remove power peaks introduced by or not sufficiently reduced during initial power peak evaluation and processing steps, the power peak evaluation and processing steps may be repeated at least once in a cascaded manner. According to a further variant, the peak power evaluation and processing steps discussed herein are combined with another peak power reduction technique such as a subsequent clipping operation.

The modulated signal processed in accordance with the present disclosure may be any signal comprising (from a frequency domain perspective) a plurality of independent subcarriers.

According to a further aspect, a transmitter stage is provided according to claim 14 comprising a modulator configured to dynamically map a set of M input symbols onto a set of N orthogonal subcarriers to generate a modulated signal as a stream after single-carrier frequency-division multiple access (SC-FDMA) modulation, a peak detector configured to evaluate a power distribution of the modulated signal stream in the time domain to detect one or more power peaks, and a processor configured to process the one or more power peaks detected in the modulated signal stream taking into account the subcarrier mapping.

The modulator may be configured to change the mapping of input symbols to subcarriers, and the processor may be configured to adapt the processing of the one or more power peaks accordingly. In cases in which M<N, the modulator may be further configured to map the M input symbols on M subcarriers, and to allocate to each of the remaining (N-M) subcarriers a value zero. In such a situation, the processor may additionally be configured to process the one or more power peaks taking into account one or more spectral portions consisting of the (N-M) subcarriers to which the value zero has been allocated.

The transmitter stage may be implemented in a mobile terminal (such as a mobile telephone, a network or data card, etc.) and/or in a base station of a radio access network. The modulator of the transmitter stage may be configured to generate a signal comprising individual subcarriers, such as an SC-FDMA signal, an OFDM signal or an OFDMA signal.

Brief Description of the Drawings

Further aspects and advantages of the technique presented herein will become apparent from the following description of preferred embodiments and the drawings, wherein:

Fig. 1    schematically illustrates a possible implementation of an SC-FDMA modulator stage;

Fig. 2    schematically illustrates an embodiment of a transmitter stage including a peak cancellation stage;

Fig. 3    shows a flow diagram according to a method embodiment;

Fig. 4       schematically shows an embodiment of components of an SC-FDMA transmitter stage;

Fig. 5       is a schematic diagram illustrating an aspect of a peak detection process;

Fig. 6       is a schematic frequency domain diagram illustrating the subcarrier allocation for an arbitrary symbol in the frequency domain;

Fig. 7       is a schematic frequency domain diagram illustrating a test pattern in context with obtaining a peak cancelling filter function;

Fig. 8       is a schematic time domain diagram illustrating a pulse shape for peak cancellation; and

Fig. 9       shows two schematic diagrams illustrating the effects of the peak power cancellation approach discussed herein.

Figs. 10       schematically shows an exemplary implementation of a peak cancellation stage; and

Fig. 11       schematically shows an embodiment of a cascaded implementation of peak cancellation stages.

**Description of Preferred Embodiments**

In the following description of preferred embodiments, for purposes of explanation and not limitation, specific details are set forth (such as particular signal processing components and sequences of steps) in order to provide a thorough understanding of the present invention. It will be apparent to one skilled in the art that the present invention may be practiced in other embodiments that depart from these specific details. For example, while the following embodiments will primarily be described in context with an SC-FDMA transmitter stage, the present invention can also be implemented in OFDM, OFDMA and other transmitter stages operating on the basis of multiple independent subcarriers.

Moreover, those skilled in the art will appreciate that the services, functions and steps explained herein below may be implemented using software functioning in conjunction with a programmed microprocessor, an Application Specific Integrated Circuit (ASIC), a Digital Signal Processor (DSP) or a general purpose computer. It will also be appreciated that while the following embodiments will primarily be described in context with methods and devices, the invention may also be embodied in a computer program product as well as in a system comprising a computer processor and a memory coupled to the processor, wherein the memory is encoded with one or more programs that may perform the services, functions and steps disclosed herein.

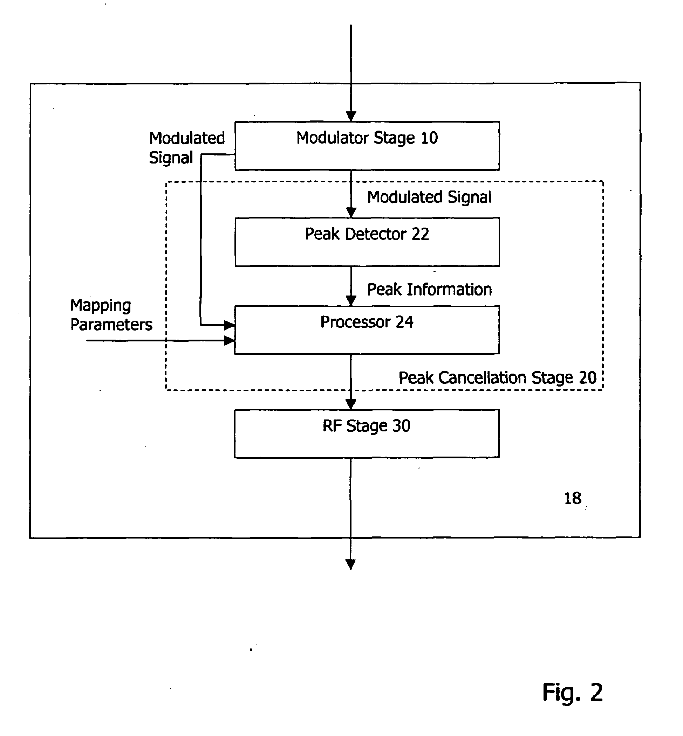

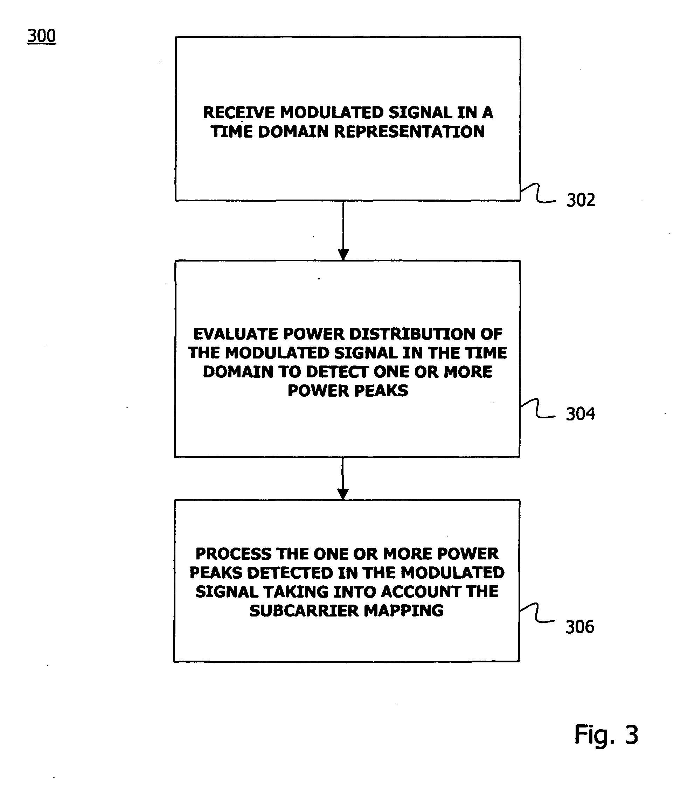

Fig. 2 shows an exemplary transmitter stage 18 that can be implemented in accordance with the LTE standard in a mobile terminal (such as a mobile telephone or a network card) for SC-FDMA-based uplink transmission or in a base station for OFDMA-based downlink transmission. The transmitter stage 18 may, of course, also be utilized in combination with other communications standards. The operation of the transmitter stage 18 will be described with reference to the schematic flow diagram 300 of Fig. 3.

As shown in Fig. 2, the transmitter stage 18 comprises a modulator stage 10 as well as a peak cancellation stage 20 arranged downstream of the modulator stage 10. The transmitter stage 18 further comprises a Radio Frequency (RF) stage 30 configured to up-convert an output signal of the peak cancellation stage 20 into the RF range and to amplify the up-converted signal.

The modulator stage 10 is adapted to receive from a baseband processor (not shown in Fig. 2) individual sets (or blocks) of M complex-valued symbols in one of several possible baseband modulation formats such as BPSK or 16-QAM. The modulator stage 10 is further configured to map each received set of M input symbols onto a set of N orthogonal subcarriers (with $M < N$) to generate a modulated signal. The modulator stage 10 may, for example, have a configuration similar to the SC-FDMA modulator stage 10 illustrated in Fig. 1. Alternatively, the modulator stage 10 of Fig. 2 could also be an OFDMA modulator stage (basically lacking the DFT block 12 of Fig. 1) or any similar modulator stage.

The modulated signal output by the modulator stage 10 is received in a time domain representation by the peak cancellation stage 20 (step 302 in Fig. 3). In the peak cancellation stage 20, the modulated signal is first input to a peak detector 22.

The peak detector 22 is configured to evaluate a power distribution of the modulated signal in the time domain. Specifically, the evaluation performed by the peak detector 22 aims at detecting one or more power peaks in the modulated signal (step 304). This detection can be performed by comparing the power of individual samples of the modulated signal with a power threshold. Each signal sample (or continuous sequence of signal samples) exceeding the power threshold may thus be identified as an individual power peak.

Information concerning any power peaks detected by peak detector 22 is fed to a processor 24 of the peak cancellation stage 20. The processor 24 additionally receives the modulated signal from the modulator stage 10 to process the one or more power peaks detected by the peak detector 22 in the modulated signal (step 306). The processing performed by the processor 24 is performed taking into account the subcarrier mapping applied by the modulator stage 10. To this end, the processor 24 is further fed with corresponding mapping parameters as indicated in Fig. 2.

After having processed the one or more power peaks detected by the peak detector 22 in the modulated signal generated within the modulator stage 10, the processor 24 outputs the processed signal to the RF stage 30. As mentioned above, the RF stage 30 is configured to up-convert the signal output by the processor 24 into the RF domain. The up-converted signal will then be amplified and transmitted via one or more antennas.

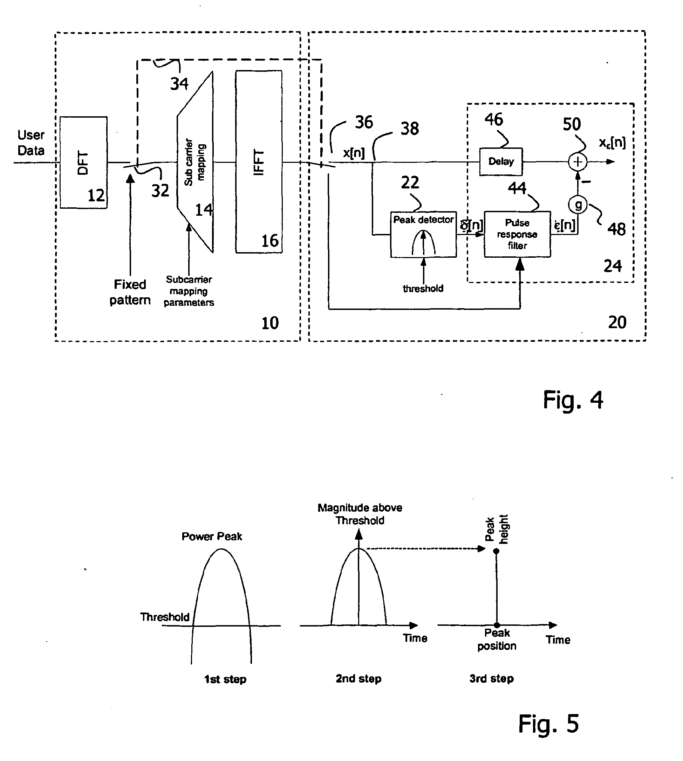

In the following, a possible configuration of the modulator stage 10 and of the peak cancellation stage 20 shown in Fig. 2 will be described in more detail with reference to the schematic block diagram of Fig. 4. The modulator stage 10 is configured as a SC-FDMA modulator stage similar to the SC-FDMA modulator stage discussed above in context with Fig. 1. For this reason, only the additional features of the modulator stage 10 shown in Fig. 4 will be explained in more detail.

As shown in Fig. 4, the subcarrier mapping block 14 of the modulator stage 10 includes an input for receiving subcarrier mapping parameters. The subcarrier mapping parameters are indicative of a specific association (or N mapping relationship) between a set of M input symbols on the one hand and a set of orthogonal subcarriers on the other hand. Since the modulator stage 10 operates as an SC-FDMA modulator, $M < N$ applies. In an exemplary LTE telecommunication system, the mapping between input symbols and subcarriers may dynamically change from one time slot to another time slot in accordance with control commands received from the base station, and any such changes are communicated to the subcarrier mapping block 14 via the mapping parameter input.

As can be seen in Fig. 4, the modulator stage 10 further comprises a switch 32 located between the DFT block 12 and the subcarrier mapping block 14. The switch 32 can be operated to selectively couple the input of the subcarrier mapping block 14 to either the output of DFT block 12 or to a pattern input of the modulator stage 10. The purpose of this pattern input will be described in more detail below. Suffice it here to say that the switch 32 is coupled via a control connection 34 to a further switch 36 located at an input end of the peak cancellation stage 20. The control connection 34 permits a synchronized control of the two switches 32 and 36 as will be discussed below.

During normal operation of the peak cancellation stage 20, the switch 36 couples the output of the modulator stage 10 to an internal branching point 38 of the peak cancellation stage 20. The branching point 38 distributes the output of the modulator stage 10 over two parallel signal paths. The peak detector 22 is arranged in one signal path, and the processor 24 stretches over both signal paths.

As shown in Fig. 4, the processor 24 comprises a pulse response filter 44 co-located with the peak detector 22 in one signal branch and an optional gain adjustment unit 48 located in the signal branch after the pulse response filter 44. Moreover, the processor 24 comprises a delay unit 46 in the other signal branch as well as an adder 50 configured to subtract the gain-adjusted signal output by the gain adjustment unit 48 from the delayed signal generated by the delay unit 46.

Although not shown in Fig. 4, a cyclic prefix insertion stage may additionally be provided. In one implementation, the cyclic prefix insertion stage is incorporated into the modulator stage 10. In such a case, the modulated signal processed by the peak cancellation stage 20 will thus already include the cyclic prefix. In another implementation, the cyclic prefix insertion stage is arranged in the signal path downstream of the peak cancellation stage 20. In this case, the cyclic prefix will be inserted after the peak power processing operation performed by the peak cancellation stage 20.

In the following, the basic operational steps performed by the peak cancellation stage 20 will first generally be described with reference to Fig. 4. Then, a more detailed explanation of the individual operational steps will be given with reference to the schematic diagrams of Figs. 5 to 9.

In the normal operational state of the modulator stage 10 and the peak cancellation stage 20 shown in Fig. 4, the switches 32 and 36 are in their upper positions, so that input symbols (user data) fed to the modulator stage 10 will be processed in accordance with the SC-FDMA principles and the SC-FDMA modulated signal output by the modulator stage 10 will be fed to the branching point 38 at the input end of the peak cancellation stage 20. The modulated signal thus input to the peak cancellation stage 20 comprises a plurality of consecutive samples x[n] in a time domain representation.

In the peak detector 22 each time domain sample x[n] is subjected to a threshold decision. The threshold decision is based on a threshold value corresponding to a target value for the maximum peak power. In the peak detector 22, the maxima of magnitudes of signal pulses above the threshold value are extracted and an intermediate signal in the form of an impulse train $\delta[n]$ is generated. The impulse train $\delta[n]$ comprises a number of impulses corresponding to the number of detected peaks. Each impulse in the impulse train $\delta[n]$ is placed at the time position of the corresponding peak and has a complex value that corresponds to the value of the peak amplitude exceeding the threshold value and has the phase of the corresponding peak.

The impulse train $\delta[n]$ output by the peak detector 22 is input to the pulse response filter 44. In the pulse response filter 44, the impulse train $\delta[n]$ is filtered using a filter function corresponding to an impulse response having the same spectral distribution (i.e., occupying the same spectral portion or spectral portions in the spectral range of the subcarriers) as the symbol currently processed. The filtering within the pulse response filter 44 yields an error signal $\varepsilon$ [n] exhibiting pulses exactly at the peak positions. Each pulse in the error signal $\varepsilon$[n] additionally has a magnitude corresponding to the peak height above the threshold value applied by the peak detector 22 and a shape corresponding to the peak shape.

The error signal $\varepsilon$[n] output by the pulse response filter 44 is input to the (optional) gain adjustment unit 48. By adjusting a gain factor applied by the gain adjustment unit 48, the strength of the peak reduction performed by the peak cancellation stage 20 can be modified as required

In a final step, the error signal $\varepsilon$[n] thus obtained is subtracted by the adder 50 from the original modulated signal that has been delayed by the delay unit 46 such that the power peaks in the delayed signal are temporally aligned with the corresponding compensation pulses in the error signal $\varepsilon$[n]. As a result, the instantaneous signal power of the signal samples $x_\varepsilon$[n] output by the adder 50 will not exceed the threshold value. Consequently, lower non-linear distortions at a lower amplifier back-off will be obtained in the RF stage following the peak cancellation stage 20.

The operations performed by the peak detector 22 and the pulse response filter 44 of the peak cancellation stage 20 shown in Fig. 4 will now be described in more detail with reference to the schematic diagrams of Figs. 5 to 9.

The operation of the peak detector 22 is illustrated in the schematic diagram of Fig. 5. In a first step, the magnitude of the modulated time-domain signal is compared with a fixed or adjustable threshold value. This threshold value defines the maximum of the power peaks after peak power reduction. In a second step, only the parts of the signal above the threshold value are extracted. Those signal parts will be regarded as peaks that need to be cancelled. A simple algorithm to detect the maxima could, for example, be based on a comparison of three consecutive samples x [n-1], x[n] and x[n+1]. A peak at the position of sample x[n] can thus be identified if abs (x[n-1]) < abs (x[n]) AND abs (x [n+1]) < abs (x[n]).

As a result of this peak detection process, the peak height (or magnitude) above the threshold value and the peak position in time can be extracted and recorded in a third step. Additionally, the phase of the peak will be recorded. The process illustrated in Fig. 5 is performed over the complete time function of an individual symbol comprised in the modulated signal. The parameters (peak amplitude/peak height, peak position and peak phase) of all peaks are recorded, and from the recorded information an intermediate signal in the form of the impulse train $\delta$[n] is generated.

Each detected peak included in the impulse train $\delta$[n] can be regarded as a Dirac impulse. Such a Dirac impulse is not suitable to cancel a power peak in the original signal as it would reduce the signal amplitude only at a single point in time when subtracted from the original signal by the adder 50, while the original peak has a certain extension in time as shown in Fig. 5. Additionally, the Dirac impulse has an infinitively wide spectrum and would thus disturb signals in adjacent spectral portions or frequency bands. Consequently, each impulse of the impulse train $\delta$[n] must be processed such that the processed pulse has a spectrum not extending over the one or more spectral portions occupied by the original signal. At the same time, the shape of the processed impulse should closely match the corresponding peak shape in the original signal. The processing operations performed in this regard include a pulse shaping performed by the pulse response filter 44.

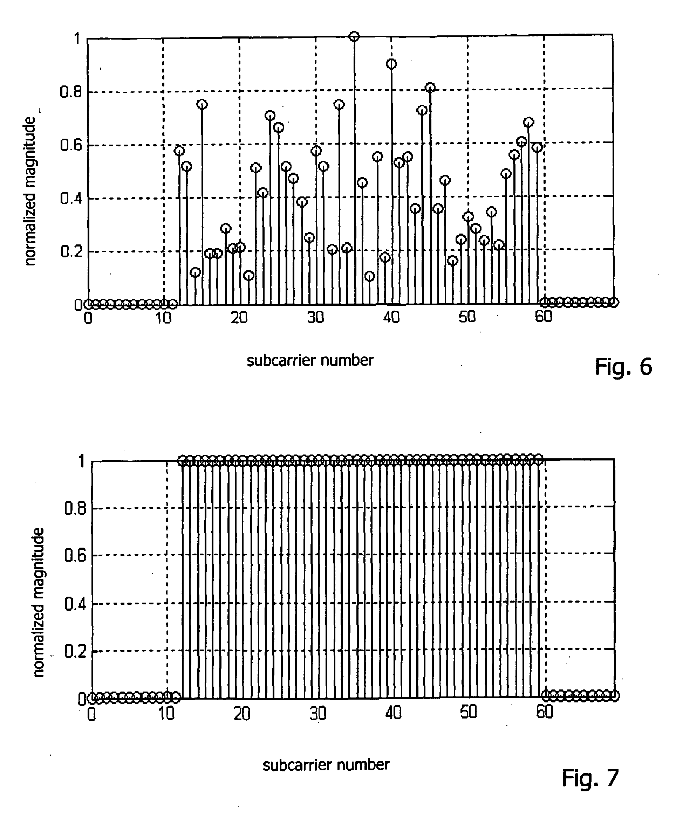

The filter function of the pulse response filter 44 is adaptively generated taking into account parameters describing the current subcarrier mapping. In the localized mode of SC-FMDA, the orthogonal subcarriers onto which a set of input symbols is mapped are contiguous in the frequency domain as illustrated in Fig. 6 for an arbitrary SC-FDMA symbol output by the subcarrier mapping block 14 of Fig. 4 (i.e., right before the IFFT block 16). In the exemplary scenario shown in Fig. 6, the output of the DFT operation applied to the input symbols is mapped onto 48 subcarriers (namely on the subcarriers having the numbers 12 to 59). The remaining subcarriers (i.e., the subcarriers having the numbers 0 to 11 and 60 and higher) are not allocated during the subcarrier mapping process. Rather, a fixed value of zero is assigned to these subcarriers.

As shown in Fig. 6, in the localized mode of SC-FDMA only a single contiguous spectral portion defined by a plurality of adjacent subcarriers will be allocated during the subcarrier mapping operation. In other SC-FDMA modes (such as the distributed mode), the subcarriers may be allocated in a non-contiguous manner. In other words, during the mapping operation subcarriers in spaced-apart spectral portions may be allocated.

In a subcarrier allocation scenario as illustrated in Fig. 6, the filter function of the pulse response filter 44 shown in Fig. 4 fulfilling the processing requirements of a limited spectral width and a matching pulse shape discussed above may be represented in the frequency domain as a rectangle spanning the frequency range of the signal. The corresponding time pulse (or filter response in the time domain) is a sinc or sin x/x function. It can be mathematically shown that the sinc function matches the shape of the pulses in the original signal in an optimal way. Nevertheless, other functions of similar shapes can be used alternatively.

As has become apparent from the above, the specific filter function of the pulse response filter 44 depends on the subcarrier mapping. In other words, construction of the specific filter function requires knowledge of certain parameters of the subcarrier mapping operation. In particular, the specific subcarriers allocated during the mapping operation have to be taken into account when constructing the specific filter function. In this manner, it can be ensured that the filter function is constructed such that the filtered pulses have a spectrum essentially not extending into the signal spectrum of subcarriers not allocated during the mapping operation.

According to a first variant, the specific filter function is calculated based on the subcarrier mapping parameters. This approach may include a dynamic re-calculation of the filter function in response to changes of the subcarrier mapping.

According to a second variant, the filter function is determined based on a test pattern as illustrated in Fig. 7. The test pattern of Fig. 7 comprises unit valued samples at the same frequency points allocated by the subcarrier mapping operation. This becomes apparent from a comparison of Figs. 6 and 7. The test pattern may be generated by simply exchanging each allocated non-zero sample of the signal spectrum illustrated in Fig. 6 by a constant value such as 1.

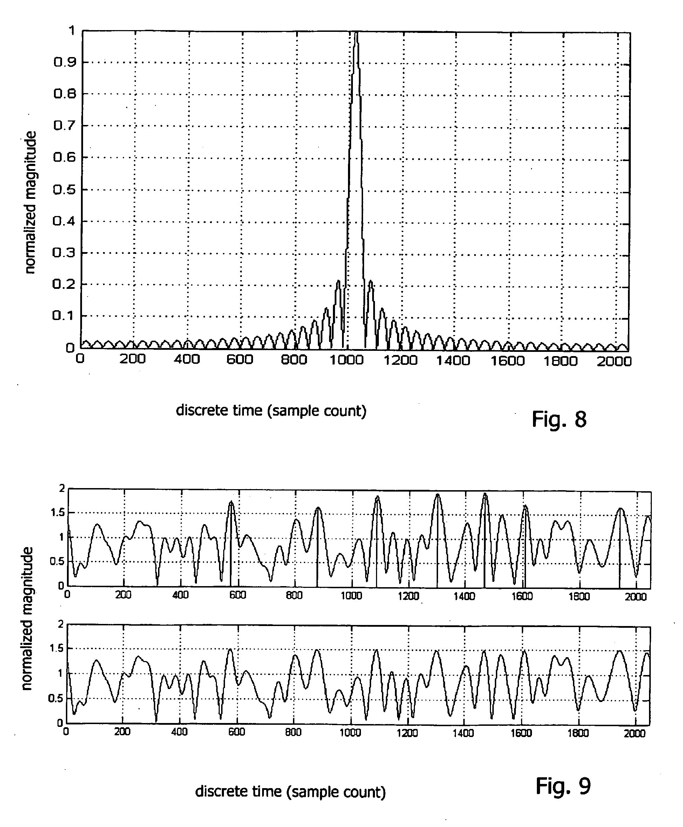

To obtain and exploit the test pattern of Fig. 7, the switches 32 and 36 shown in Fig. 4 are switched to their lower switching state. In the lower switching state of the switch 32, a fixed pattern input to the modulator stage 10 will be subjected to a subcarrier mapping operation in the subcarrier mapping block 14. The resulting output signal of the subcarrier mapping block 14 is shown in Fig. 7. The rectangular function shown in Fig. 7 is inverse in Fourier transformed in the IFFT block 16. The resulting sin x/x time domain function is scaled (or normalized) such that its maximum point has the complex value 1 + j x 0. Since the switch 36 of the peak cancellation stage 20 is in its lower switching position, the filter function thus generated is transferred to the pulse response filter 44 for being stored therein and for being applied for filtering of the impulse train $\delta[n]$. The magnitude of the resulting filter response (pulse) in a time domain representation is shown in Fig. 8. The filter function thus generated is indicative of the current subcarrier mapping.

Once the filter function has been generated, the switches 32, 36 can again be switched to their upper positions and signal processing can continue as usual. The switching and processing operations discussed above in context with generating a filter function indicative of the current subcarrier mapping may be repeated each time the subcarrier mapping changes.

In the following, the scaled discrete pulse illustrated in Fig. 8 is denoted as p[n]. In the pulse response filter 44, for each peak detected by the peak detector 22 the pulse function p[n] is scaled with the magnitude of the peak above the threshold value and with the phase of the peak. The resulting operation can be expressed as

$$p_c[n] = p[n - n_{\hat{x}}] \cdot (abs(\hat{x}) - threshold) \cdot e^{j \arg(\hat{x})}$$

The function $p_c[n]$ thus obtained will then be subtracted from the original signal by the adder 50 of Fig. 4 to cancel or at least reduce the corresponding peak contained in the original signal. Optionally, the strength of the peak reduction is adjusted by setting the gain factor of the gain adjustment unit 46 as required. This gain adjustment and subtraction procedure is repeated for each detected peak.

The efficiency of this technique is illustrated in Fig. 9. Fig. 9 shows in a time domain representation the modulated signal before (upper half) and after (lower half) peak cancellation. In the example, a threshold value of 1.5 is applied. As becomes apparent from a comparison of the signal before and after peak cancellation, the present peak cancellation technique efficiently reduces all peaks above 1.5 to a value not exceeding 1.5. Additionally, the shape of the peaks extending above 1.5 is essentially maintained by the peak cancellation operation. Furthermore, since the filter function in the frequency domain has only non-zero values at the frequency points (subcarriers) allocated during the subcarrier mapping, any signals adjacent in the spectrum will not be disturbed.

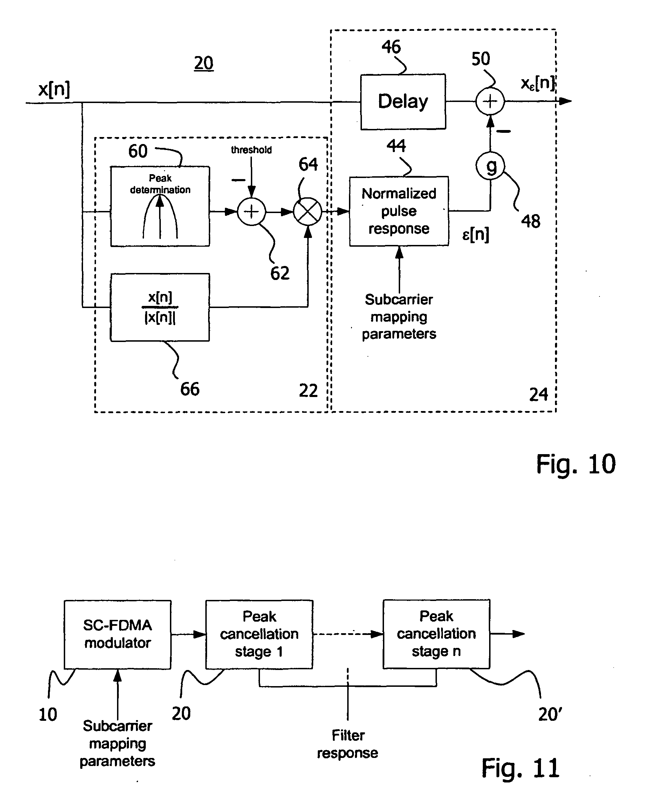

The peak cancellation approach discussed above in context with Fig. 4 can also be implemented in an alternative manner. In this regard, reference is made to the block diagram illustrated in Fig. 10. The block diagram of Fig. 10 shows alternative configurations of the peak detector 22 and the processor 24. The peak detector 22 now comprises a peak determination unit 60, an adder 62, a multiplier 64 and a calculation unit 66.

The peak detector 22 of Fig. 10 operates as follows. The sample stream x[n] after SC-FDMA modulation and cyclic prefix insertion is input to the peak determination unit 60. The peak determination unit 60 detects individual peaks (for example as described in context with the peak detector 22 of Fig. 4). The magnitude of each peak determined by the peak determination unit 60 is then reduced by the threshold value in the adder 62 and multiplied in the multiplier 64 with its phase term x[n]/|x[n]| = exp (j arg (x[n])) as determined by the calculation unit 66.

The resulting impulse train output by the peak detector 22 is input to the filter 44. The filter 44 filters the received impulse train with the normalized pulse response to obtain an error signal $\varepsilon[n]$ that will be subtracted from the original signal after an optional gain adjustment as has been discussed above.

The normalized impulse response applied by the filter 44 is constructed in accordance with the current subcarrier allocation. The construction can be performed as discussed above in context with Fig. 4 (i.e. by an inverse Fourier transformation and by scaling of the resulting function consisting of unit samples having the same frequency domain allocation as the subcarrier mapping of demodulated signal). As an alternative, the normalized impulse response can be synthesized directly in the time domain or derived from a table storing pulse functions for all possible allocations. The pulse function may need to be truncated appropriately.

Due to the sidelobes of the pulse function used in the above embodiments, small side peaks may come up as a result of the peak cancellation operation. Additionally, the peak cancellation may remain incomplete for various reasons. For example, two power peaks may be very close and add up to a single power peak that is wider than the cancellation pulse subtracted from the original signal. To cope with such cases, two or more peak cancellation stages 20, 20', ... can be provided and arranged in a cascaded manner as shown in Fig. 11. Each peak cancellation stage 20, 20', ... removes peak remainders from the previous stage.

The subtraction of peak cancellation pulses introduces a certain error into the original signal, and this error causes a worse Error Vector Magnitude (EVM) and inter-subcarrier leakage. These effects limit to a certain extent the applicable threshold value. Nonetheless, a peak reduction of up to 3 dB will in any case be feasible.

As a general result of the peak reduction techniques proposed herein, the number and the height of power peaks can be reduced. Thus, the power amplifier efficiency is increased, which permits a higher output power. Additionally, for battery-operated devices longer communication times (e.g., talk times) are achieved. As a further advantage, the techniques can be implemented such that no impact on subcarriers outside the private subcarrier allocation occurs and a low Adjacent Channel Leakage Ratio (ACLR) can be obtained. The peak power reduction can be adaptively performed in accordance with a dynamically changing subcarrier allocation. It can be shown that the implementations proposed herein provide the lowest error in the least mean square sense.

The techniques presented herein may be realised in the form of software, in the form of hardware, or using a combined software/hardware approach. As regards a software aspect, a computer program product comprising program code portions for performing the steps presented herein when the computer program product is run on one or more computing devices may be provided. The computer program product may be stored on a computer-readable recording medium such as a memory chip, a CD-ROM, a hard disk, and so on. Moreover, the computer program product may be provided for download onto such a recording medium.

It is believed that many advantages of the present invention will be fully understood from the forgoing description, and it will be apparent that various changes may be made in the form, construction and arrangement of the exemplary aspects thereof without departing from the scope of the invention or without sacrificing all of its advantages. Because the invention can be varied in many ways, it will be recognized that the invention should be limited only by the scope of the following claims.

## Claims

1.   A method (300) of peak power reduction in a transmitter stage (18; 10; 20) configured to dynamically map a set of M input symbols onto a set of N orthogonal subcarriers to generate a modulated signal as a stream (x [n]) after single-carrier frequency-division multiple access (SC-FDMA) modulation, wherein M < N, wherein the M input symbols are mapped onto M subcarriers, and wherein to each of the remaining (N-M) subcarriers a predefined value is allocated, the method being **characterized by**:

    - receiving (302) the modulated signal stream in a time domain representation;
    - evaluating (304) a power distribution of the modulated signal stream in the time domain to detect one or more power peaks represented by an impulse train ($\delta[n]$); and
    - processing (306) the one or more power peaks detected in the modulated signal stream by generating an error signal ($\varepsilon[n]$) resulting from applying a filter function to the impulse train and subtracting the error signal from the modulated signal, taking into account the dynamically changing subcarrier mapping such that one or more spectral portions consisting of the (N-M) subcarriers to which the predefined value has been allocated are left essentially undisturbed, wherein the filter function is obtained by repeating, each time the subcarrier mapping changes, the steps:

        (a) decoupling an input of the subcarrier mapping from the input symbols and coupling the input of the subcarrier mapping to a fixed pattern having the same constant value for each allocated non-zero sample; and
        (b) subjecting the fixed pattern to the subcarrier mapping and to an inverse Fourier transformation of the SC-FDMA modulation and storing the thus generated filter function.

2.   The method of claim 1, further comprising changing the mapping of input symbols to subcarriers and adapting the processing of the one or more power peaks accordingly.

3.   The method of claim 1 or 2, wherein to each of the remaining (N-M) subcarriers the predefined value zero is allocated.

**4.** The method of any of the preceding claims, wherein processing the one or more power peaks is performed taking into account one or more spectral portions consisting of the (N-M) subcarriers to which the predefined value has been allocated.

**5.** The method of any of the preceding claims, wherein processing the one or more power peaks is based on the error signal.

**6.** The method of claim 5, wherein the error signal has a pulse shape essentially not extending into the one or more spectral portions.

**7.** The method of claim 5 or 6, wherein generating the error signal comprises generating the impulse trains as an intermediate signal indicative of at least one of a position, an amplitude and a phase of each of the one or more power peaks detected in the modulated signal stream.

**8.** The method of claim 7, wherein generating the error signal comprises subjecting the intermediate signal to a pulse shaping operation taking into account the subcarrier mapping.

**9.** The method of claim 8, wherein the pulse shaping operation is based on the filter function calculated based on the subcarrier mapping.

**10.** The method of claim 8, wherein the pulse shaping operation is based on the filter function obtained by mapping the fixed pattern onto the subcarriers in accordance with the subcarrier mapping to obtain a test pattern, transforming the test pattern mapped on the subcarriers into the time domain, and deriving the filter function from the resulting time domain signal.

**11.** The method of any of the preceding claims, wherein evaluating the power distribution of the modulated signal stream comprises a threshold decision to detect the one or more power peaks.

**12.** The method of claim 11, wherein the processing of the one or more power peaks detected in the modulated signal stream aims at reducing the one or more power peaks to a signal level not exceeding a threshold value applied during the threshold decision.

**13.** The method of any of the preceding claims, wherein the steps of evaluating the power distribution and of processing the one or more power peaks are repeated at least once to remove power peaks introduced by or not sufficiently reduced during the initial evaluating and processing steps.

**14.** A transmitter stage (18) comprising:

- a modulator (10) configured to dynamically map a set of M input symbols onto a set of N orthogonal subcarriers to generate a modulated signal as a stream (x [n]) after single-carrier frequency-division multiple access (SC-FDMA) modulation, wherein M < N, wherein the M input symbols are mapped onto M subcarriers, and wherein to each of the remaining (N-M) subcarriers a predefined value is allocated,

**characterized by**:

- a peak detector (22) configured to evaluate a power distribution of the modulated signal stream in the time domain to detect one or more power peaks represented by an impulse train ($\delta[n]$); and
- a processor (24) configured to process the one or more power peaks detected in the modulated signal stream by generating an error signal ($\varepsilon[n]$) resulting from applying a filter function to the impulse train and subtracting the error signal from the modulated signal, taking into account the dynamically changing subcarrier mapping such that one or more spectral portions consisting of the (N-M) subcarriers to which the predefined value has been allocated are left essentially undisturbed by means of the processor further configured to obtain the filter function by repeating, each time the subcarrier mapping changes, the steps:

(a) decoupling an input of the subcarrier mapping from the input symbols and coupling the input of the subcarrier mapping to a fixed pattern having the same constant value for each allocated non-zero sample; and
(b) subjecting the fixed pattern to the subcarrier mapping and to an inverse Fourier transformation of the SC-FDMA modulation and storing the thus generated filter function.

15. The transmitter stage of claim 14, wherein the modulator (10) is configured to change the mapping of input symbols to subcarriers, and wherein the processor (24) is configured to adapt the processing of the one or more power peaks accordingly.

16. The transmitter stage of claim 14 or 15, wherein the modulator (10) is configured to allocate to each of the remaining (N-M) subcarriers the predefinedvalue zero.

17. The transmitter stage of claim 14, 15 or 16, wherein the processor (24) is further configured to process the one or more power peaks taking into account one or more spectral portions consisting of the (N-M) subcarriers to which the predefined value has been allocated.

18. A mobile terminal comprising the transmitter stage of one of claims 14 to 17.

19. A base station comprising the transmitter stage of one of claims 14 to 17.

**Patentansprüche**

1. Verfahren (300) zur Spitzenleistungsverringerung in einer Senderstufe (18; 10; 20), die so konfiguriert ist, dass sie einen Satz von M Eingangssymbolen dynamisch auf einen Satz von N orthogonalen Unterträgern abbildet, um nach einer Einzelträger-Frequenzmultiplexzugriffs (SC-FDMA)-Modulation ein moduliertes Signal als einen Strom (x [n]) zu erzeugen, wobei M < N, wobei die M Eingangssymbole auf M Unterträger abgebildet werden, und wobei jedem der restlichen (N - M) Unterträger ein vordefinierter Wert zugeordnet wird, wobei das Verfahren **gekennzeichnet ist durch**:

   - Empfangen (302) des modulierten Signalstroms in einer Zeitbereichsdarstellung;
   - Beurteilen (304) einer Leistungsverteilung des modulierten Signalstroms im Zeitbereich, um eine oder mehrere Leistungsspitzen zu erkennen, die durch eine Impulsfolge ($\delta[n]$) darstellt sind; und
   - Verarbeiten (306) der einen oder der mehreren im modulierten Signalstrom erkannten Leistungsspitzen **durch** Erzeugen eines Fehlersignals ($\varepsilon[n]$), das aus dem Anwenden einer Filterfunktion auf die Impulsfolge resultiert, und Subtrahieren des Fehlersignals vom modulierten Signal unter Berücksichtigung der sich dynamisch ändernden Unterträgerabbildung, derart dass ein oder mehrere Spektralabschnitte, die aus den (N - M) Unterträgern bestehen, welchen der vordefinierte Wert zugeordnet wurde, im Wesentlichen ungestört belassen werden, wobei die Filterfunktion erhalten wird, indem bei jeder Änderung der Unterträgerabbildung die folgenden Schritte wiederholt werden:

   (a) Ent koppeln eines Eingangs der Unterträgerabbildung von den Eingangssymbolen und Koppeln des Eingangs der Unterträgerabbildung mit einem festen Muster mit dem gleichen konstanten Wert für jeden zugeordneten Nicht-Null-Abtastwert; und
   (b) Unterziehen des festen Musters der Unterträgerabbildung und einer Fourier-Rücktransformation der SC-FDMA-Modulation und Speichern der auf diese Weise erzeugten Filterfunktion.

2. Verfahren nach Anspruch 1, ferner umfassend ein Ändern der Abbildung von Eingangssymbolen auf Unterträger und dementsprechendes Anpassen der Verarbeitung der einen oder mehreren Leistungsspitzen.

3. Verfahren nach Anspruch 1 oder 2, wobei jedem der restlichen (N - M) Unterträger der vordefinierte Wert null zugeordnet wird.

4. Verfahren nach einem der vorhergehenden Ansprüche, wobei das Verarbeiten der einen oder der mehreren Leistungsspitzen unter Berücksichtigung eines oder mehrerer Spektralabschnitte erfolgt, die aus den (N - M) Unterträgern bestehen, welchen der vordefinierte Wert zugeordnet wurde.

5. Verfahren nach einem der vorhergehenden Ansprüche, wobei das Verarbeiten der einen oder der mehreren Leistungsspitzen auf dem Fehlersignal basiert.

6. Verfahren nach Anspruch 5, wobei das Fehlersignal eine Impulsform aufweist, die sich im Wesentlichen nicht in den einen oder die mehreren Spektralabschnitte erstreckt.

7. Verfahren nach Anspruch 5 oder 6, wobei das Erzeugen des Fehlersignals ein Erzeugen der Impulsfolgen als ein Zwischensignal umfasst, das mindestens eines von einer Position, einer Amplitude und einer Phase von jeder der einen oder der mehreren im modulierten Signalstrom erkannten Leistungsspitzen anzeigt.

8. Verfahren nach Anspruch 7, wobei das Erzeugen des Fehlersignals ein Unterziehen des Zwischensignals einer Impulsformungsoperation unter Berücksichtigung der Unterträgerabbildung umfasst.

9. Verfahren nach Anspruch 8, wobei die Impulsformungsoperation auf der Filterfunktion basiert, die basierend auf der Unterträgerabbildung berechnet wird.

10. Verfahren nach Anspruch 8, wobei die Impulsformungsoperation auf der Filterfunktion basiert, die durch Abbilden des festen Musters auf die Unterträger gemäß der Unterträgerabbildung zum Erhalten eines Prüfmusters, Umformen des auf die Unterträger abgebildeten Prüfmusters in den Zeitbereich und Ableiten der Filterfunktion aus dem resultierenden Zeitbereichssignal erhalten wird.

11. Verfahren nach einem der vorhergehenden Ansprüche, wobei das Beurteilen der Leistungsverteilung des modulierten Signalstroms eine Schwellenentscheidung zum Erkennen der einen oder der mehreren Leistungsspitzen umfasst.

12. Verfahren nach Anspruch 11, wobei das Verarbeiten der einen oder der mehreren im modulierten Signalstrom erkannten Leistungsspitzen auf das Verringern der einen oder der mehreren Leistungsspitzen auf einen Signalpegel abzielt, der einen Schwellenwert nicht überschreitet, der während der Schwellenentscheidung angewendet wird.

13. Verfahren nach einem der vorhergehenden Ansprüche, wobei die Schritte des Beurteilens der Leistungsverteilung und des Verarbeitens der einen oder der mehreren Leistungsspitzen mindestens einmal wiederholt werden, um Leistungsspitzen zu entfernen, die durch die anfänglichen Beurteilungs- und Verarbeitungsschritte eingeführt oder während derselben nicht ausreichend verringert wurden.

14. Senderstufe (18), umfassend:

- einen Modulator (10), der so konfiguriert ist, dass er einen Satz von M Eingangssymbolen dynamisch auf einen Satz von N orthogonalen Unterträgern abbildet, um nach einer Einzelträger-Frequenzmultiplexzugriffs (SC-FDMA)-Modulation ein moduliertes Signal als einen Strom ($x[n]$) zu erzeugen, wobei M < N, wobei die M Eingangssymbole auf M Unterträger abgebildet werden, und wobei jedem der restlichen (N - M) Unterträger ein vordefinierter Wert zugeordnet wird,

**gekennzeichnet durch**:

- einen Spitzendetektor (22), der so konfiguriert ist, dass er eine Leistungsverteilung des modulierten Signalstroms im Zeitbereich beurteilt, um eine oder mehrere Leistungsspitzen zu erkennen, die **durch** eine Impulsfolge ($\delta[n]$) darstellt sind; und
- einen Prozessor (24), der so konfiguriert ist, dass er die eine oder die mehreren im modulierten Signalstrom erkannten Leistungsspitzen **durch** Erzeugen eines Fehlersignals ($\varepsilon[n]$), das aus dem Anwenden einer Filterfunktion auf die Impulsfolge resultiert, und Subtrahieren des Fehlersignals vom modulierten Signal unter Berücksichtigung der sich dynamisch ändernden Unterträgerabbildung derart verarbeitet, dass ein oder mehrere Spektralabschnitte, die aus den (N - M) Unterträgern bestehen, welchen der vordefinierte Wert zugeordnet wurde, **durch** den Prozessor im Wesentlichen ungestört belassen werden, der ferner so konfiguriert ist, dass er die Filterfunktion **durch** Wiederholen der folgenden Schritte bei jeder Änderung der Unterträgerabbildung erhält:

(a) Entkoppeln eines Eingangs der Unterträgerabbildung von den Eingangssymbolen und Koppeln des Eingangs der Unterträgerabbildung mit einem festen Muster mit dem gleichen konstanten Wert für jeden zugeordneten Nicht-Null-Abtastwert; und
(b) Unterziehen des festen Musters der Unterträgerabbildung und einer Fourier-Rücktransformation der SC-FDMA-Modulation und Speichern der auf diese Weise erzeugten Filterfunktion.

**15.** Senderstufe nach Anspruch 14, wobei der Modulator (10) so konfiguriert ist, dass er die Abbildung von Eingangssymbolen auf Unterträger ändert, und wobei der Prozessor (24) so konfiguriert ist, dass er die Verarbeitung der einen oder der mehreren Leistungsspitzen dementsprechend anpasst.

**16.** Senderstufe nach Anspruch 14 oder 15, wobei der Modulator (10) so konfiguriert ist, dass er jedem der restlichen (N - M) Unterträger den vordefinierten Wert null zuordnet.

**17.** Senderstufe nach Anspruch 14, 15 oder 16, wobei der Prozessor (24) ferner so konfiguriert ist, dass er die eine oder die mehreren Leistungsspitzen unter Berücksichtigung eines oder mehrerer Spektralabschnitte verarbeitet, die aus den (N - M) Unterträgern bestehen, welchen der vordefinierte Wert zugeordnet wurde.

**18.** Mobiles Endgerät, umfassend die Senderstufe nach einem der Ansprüche 14 bis 17.

**19.** Basisstation, umfassend die Senderstufe nach einem der Ansprüche 14 bis 17.

## Revendications

**1.** Procédé (300) de réduction de la puissance de pic dans un étage d'émetteur (18 ;10 ; 20) configuré afin de mettre en correspondance dynamiquement un ensemble de M symboles d'entrée avec un ensemble de N sous-porteuses orthogonales pour générer un signal modulé comme un flux $(x[n])$ après une modulation à accès multiple par répartition de fréquence sur porteuse unique (SC-FDMA), dans lequel M < N, dans lequel les M symboles d'entrée sont mis en correspondance avec les M sous-porteuses, et dans lequel à chacune des sous-porteuses restantes (N-M), une valeur prédéfinie est allouée, le procédé étant **caractérisé par** :

- recevoir (302) le flux de signaux modulé dans une représentation de domaine temporel ;
- évaluer (304) une distribution de puissance du flux de signaux modulé dans le domaine temporel pour détecter un ou des pics de puissance représentés par un train d'impulsions $(\delta[n])$ ; et
- traiter (306) le ou les pics de puissance détectés dans le flux de signaux modulés en générant un signal d'erreur $(\varepsilon[n])$ résultant de l'application d'une fonction de filtre au train d'impulsions et en soustrayant le signal d'erreur du signal modulé, en prenant en compte la mise en correspondance de sous-porteuses changeant dynamiquement de telle sorte que une ou des portions spectrales composées des (N-M) sous-porteuses auxquelles la valeur prédéfinie a été allouée restent essentiellement non perturbées, dans lequel la fonction de filtre est obtenue en répétant, chaque fois que la mise en correspondance de sous-porteuse varie, les étapes consistant à :

(a) découpler une entrée de la mise en correspondance de sous-porteuse des symboles d'entrée et coupler l'entrée de la mise en correspondance de sous-porteuse à un modèle fixe ayant la même valeur constante pour chaque échantillon non zéro alloué ; et
(b) soumettre le modèle fixe à la mise en correspondance de sous-porteuse et à une transformée de Fourier inverse de la modulation SC-FDMA et mémoriser la fonction de filtre ainsi générée.

**2.** Procédé selon la revendication 1, comprenant en outre de changer la mise en correspondance des symboles d'entrée aux sous-porteuses et d'adapter le traitement du ou des pics de puissance en conséquence.

**3.** Procédé selon les revendications 1 ou 2, dans lequel la valeur zéro prédéfinie es allouée à chacune des sous-porteuses (N-M) restantes.

**4.** Procédé selon une quelconque des revendications précédentes, dans lequel le traitement du ou des pics de puissance est effectué en prenant en compte une ou des portions spectrales composées des (N-M) sous-porteuses auxquelles la valeur prédéfinie a été allouée.

**5.** Procédé selon une quelconque des revendications précédentes, dans lequel le traitement du ou des pics de puissance est basé sur le signal d'erreur.

**6.** Procédé selon la revendication 5, dans lequel le signal d'erreur a une forme d'impulsion ne s'étendant essentiellement pas dans le ou les portions spectrales.

7. Procédé selon les revendications 5 ou 6, dans lequel la génération du signal d'erreur comprend de générer les trains d'impulsions comme un signal intermédiaire indiquant au moins une d'une position, une amplitude et une phase de chacun des pics de puissance détectés dans le flux de signaux modulé.

8. Procédé selon la revendication 7, dans lequel la génération du signal d'erreur comprend de soumettre le signal intermédiaire à une opération de façonnage d'impulsion prenant en compte la mise en correspondance de sous-porteuse.

9. Procédé selon la revendication 8, dans lequel l'opération de façonnage d'impulsion est basée sur la fonction de filtre calculée sur la base de la mise en correspondance de sous-porteuse.

10. Procédé selon la revendication 8, dans lequel l'opération de façonnage d'impulsion est basée sur la fonction de filtre obtenue en mettant en correspondance le modèle fixe avec les sous-porteuses conformément à la mise en correspondance de sous-porteuse afin d'obtenir un modèle de test, transformant le modèle de test mis en correspondance avec les sous-porteuses dans le domaine temporel et déduire la fonction de filtre du signal de domaine temporel de résultat.

11. Procédé selon une quelconque des revendications précédentes, dans lequel l'évaluation de la distribution de puissance du flux de signaux modulé comprend une décision de seuil pour détecter le ou les pics de puissance.

12. Procédé selon la revendication 11, dans lequel le traitement du ou des pics de puissance détectés dans le flux de signaux modulé vise à réduire le ou les pics de puissance à un niveau de signal n'excédant pas une valeur de seuil appliquée pendant la décision de seuil.

13. Procédé selon une quelconque des revendications précédentes, dans lequel les étapes d'évaluation de la distribution de puissance et de traitement du ou des pics de puissance sont répétées au moins une fois pour supprimer les pics de puissance induits par ou non suffisamment réduits pendant les étapes d'évaluation et de traitement initiales.

14. Etage d'émetteur (18) comprenant :

   - un modulateur (10) configuré pour mettre en correspondance dynamiquement un ensemble de M symboles d'entrée avec un ensemble de N sous-porteuses orthogonales pour générer un signal modulé comme un flux $(x[n])$ après une modulation à accès multiple par répartition de fréquence sur porteuse unique (SC-FDMA), dans lequel M < N, dans lequel les M symboles d'entrée sont mis en correspondance avec les M sous-porteuses, et dans lequel à chacune des sous-porteuses restantes (N-M), une valeur prédéfinie est allouée, **caractérisé par** :
   - un détecteur de pic (22) configuré pour évaluer une distribution de puissance du flux de signaux modulé dans le domaine temporel afin de détecter un ou des pics de puissance représentés par un train d'impulsions $(\delta[n])$ ; et
   - un processeur (24) configuré pour traiter le ou les pics de puissance détectés dans le flux de signaux modulé en générant un signal d'erreur $(\varepsilon[n])$ résultant de l'application d'une fonction de filtre au train d'impulsions et en soustrayant le signal d'erreur du signal modulé, en prenant en compte la mise en correspondance de sous-porteuses changeant dynamiquement de telle sorte que une ou des portions spectrales composées des (N-M) sous-porteuses auxquelles la valeur prédéfinie a été allouée restent essentiellement non perturbées, dans lequel la fonction de filtre est obtenue en répétant, chaque fois que la mise en correspondance de sous-porteuse varie, les étapes consistant à :

   (a) découpler une entrée de la mise en correspondance de sous-porteuse des symboles d'entrée et coupler l'entrée de la mise en correspondance de sous-porteuse à un modèle fixe ayant la même valeur constante pour chaque échantillon non zéro alloué ; et
   (b) soumettre le modèle fixe à la mise en correspondance de sous-porteuse et à une transformée de Fourier inverse de la modulation SC-FDMA et mémoriser la fonction de filtre ainsi générée.

15. Etage d'émetteur selon la revendication 14, dans lequel le modulateur (10) est configuré afin de changer la mise en correspondance des symboles d'entrée avec les sous-porteuses, et dans lequel le processeur (24) est configuré afin d'adapter le traitement du ou des pics de puissance en conséquence.

16. Etage d'émetteur selon les revendications 14 ou 15, dans lequel le modulateur (10) est configuré afin d'allouer à chacune des sous-porteuses (N-M) restantes la valeur zéro prédéfinie.

**17.** Etage d'émetteur selon les revendications 14,15 ou 16, dans lequel le processeur (24) est en outre configuré afin de traiter le ou les pics de puissance en prenant en compte une ou des portions spectrales composées des (N-M) sous-porteuses auxquelles la valeur prédéfinie a été allouée.

**18.** Terminal mobile comprenant l'étage d'émetteur selon une des revendications 14 à 17.

**19.** Station de base comprenant l'étage d'émetteur selon une des revendications 14 à 17.

Fig. 1

Fig. 2

300

RECEIVE MODULATED SIGNAL IN A
TIME DOMAIN REPRESENTATION

302

EVALUATE POWER DISTRIBUTION OF
THE MODULATED SIGNAL IN THE TIME
DOMAIN TO DETECT ONE OR MORE
POWER PEAKS

304

PROCESS THE ONE OR MORE POWER
PEAKS DETECTED IN THE MODULATED
SIGNAL TAKING INTO ACCOUNT THE
SUBCARRIER MAPPING

306

Fig. 3

Fig. 4

Fig. 5

Fig. 6

Fig. 7

discrete time (sample count)

Fig. 8

discrete time (sample count)

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050089109 A1
- US 6175551 B1
- EP 1469649 A1

**Non-patent literature cited in the description**

- Physical Channels and Modulation. *3GPP Technical Specification 36.211,* June 2007
- **S. H. HAN ; J. H. LEE.** *Modulation, Coding and Signal Processing for Wireless Communications*
- **H. G. MYUNG et al.** Single Carrier FDMA for Uplink Wireless Transmission. *IEEE VEHICULAR TECH-NOLOGY MAGAZINE,* September 2006, 30-38
- **H. G. MYUNG et al.** Peak Power Characteristics of Single Carrier FDMA MIMO Precoding System. *VTC, IEEE 66,* 01 September 2007, 477-481